# EUROPEAN PATENT SPECIFICATION

(11) **EP 2 785 769 B1**
(45) Date of publication and mention of the grant of the patent: **23.09.2015**
(21) Application number: 12798571.1
(22) Date of filing: 30.11.2012
(51) Int. Cl.: C08G 79/04, C08G 59/56, C08L 63/00, C09J 163/00

(54) **EPOXY CURATIVE COMPOSITION AND COMPOSITIONS THEREFROM**
EPOXIDHÄRTERZUSAMMENSETZUNG UND ZUSAMMENSETZUNGEN DARAUS
COMPOSITION DE DURCISSEUR ÉPOXY ET COMPOSITIONS OBTENUES À PARTIR DE CELLE-CI

(30) Priority: 30.11.2011 US 201161565310 P
(43) Date of publication of application: 08.10.2014
(73) Proprietor: 3M Innovative Properties Company, Saint Paul, Minnesota 55133-3427 (US)
(72) Inventor: ELGIMIABI, Sohaib, 41453 Neuss (DE)
(74) Representative: Vossius & Partner Patentanwälte Rechtsanwälte mbB
(86) International application number: PCT/US2012/067247
(87) International publication number: WO 2013/082396

(56) References cited:
- WO-A1-2011/031399
- WO-A2-2012/064717
- US-A- 5 629 380
- US-A1- 2010 203 249

## Description

### Field of the Disclosure

This disclosure relates to epoxy curative compositions, curable epoxy compositions containing such curative compositions, cured compositions resulting the cure of such curable epoxy compositions, and the use of any of the above in various applications including use as potting compounds.

### Summary of the Disclosure

Briefly, the present disclosure provides an epoxy curative comprising: a) a Lewis base, b) calcium nitrate, and c) a polyamine amide salt.

The present disclosure additionally provides a composition which is a mixture obtained by mixing: I) a curable epoxy resin, and II) an epoxy curative comprising: a) a Lewis base, b) calcium nitrate, and c) a polyamine amide salt. Such compositions may have a low viscosity suitable for room temperature extrusion. The composition may additionally comprise a fire retardant. The composition may additionally comprise a low density filler.

The present disclosure additionally provides cured compositions which result from cure of the mixture according to any of the preceding embodiments. The cured compositions typically have a density of less than 1.0 gram/cm³, more typically less than 0.9 gram/cm³, more typically less than 0.8 gram/cm³, more typically less than 0.7 gram/cm³, more typically less than 0.69 gram/cm³, and more typically less than 0.68 gram/cm³. The cured compositions typically have a compression strength of greater than 20 MPa, more typically greater than 25 MPa, more typically greater than 30 MPa, more typically greater than 33 MPa, and more typically greater than 35 MPa. The cured compositions typically have an overlap shear strength of greater than 8 MPa, more typically greater than 9 MPa, more typically greater than 10 MPa, and more typically greater than 10.3 MPa.

### Detailed Description

The present disclosure concerns epoxy curative compositions and curable epoxy compositions containing these curative compositions, cured compositions resulting therefrom, and their uses in various applications including as potting compounds.

In one embodiment, the present disclosure concerns an epoxy curative comprising: a) a Lewis base, b) calcium nitrate, and c) a polyamine amide salt. The present disclosure contemplates the use of both a Lewis base accelerator and calcium nitrate as an accelerator in order to achieve a high cure rate in an epoxy resin. In addition, the present disclosure contemplates the addition of a polyamine amide salt capable of reducing thickening (viscosity increase) which may occur during storage or use of a curative containing both of the Lewis base and calcium nitrate accelerators. In addition, the present disclosure contemplates the addition of a polyamine amide salt capable of reducing thickening (viscosity increase) which may occur during storage or use of a curative containing both of the Lewis base and calcium nitrate accelerators and additionally containing a high loading of low density filler materials.

In some embodiments, materials provided herein exhibit rapid cure at room temperature. In some embodiments, materials provided herein are sufficiently cured to be handled after 10 minutes at room temperature. In some embodiments, materials provided herein are sufficiently cured to be handled after 20 minutes at room temperature. In some embodiments, materials provided herein are sufficiently cured to be handled after 30 minutes at room temperature. In some embodiments, materials provided herein are sufficiently cured to be handled after one hour at room temperature. In some embodiments, materials provided herein are sufficiently cured to be handled after two hours at room temperature. In some embodiments, materials provided herein are sufficiently cured to be handled after ten hours at room temperature. In some embodiments, materials provided herein are sufficiently cured to be handled after 24 hours at room temperature. In some embodiments, materials provided herein are sufficiently cured to be handled after 48 hours at room temperature. In some embodiments, materials provided herein are sufficiently cured to be handled after seven days at room temperature.

In some embodiments, materials provided herein resist thickening (viscosity increase) during storage. In some embodiments, materials provided herein increase in viscosity by no more than 20% during a 90-day storage period at room temperature. In some embodiments, materials provided herein increase in viscosity by no more than 10% during a 90-day storage period at room temperature. In some embodiments, materials provided herein increase in viscosity by no more than 5% during a 90-day storage period at room temperature. In some embodiments, materials provided herein increase in viscosity by no more than 20% during a 10-day storage period at room temperature. In some embodiments, materials provided herein increase in viscosity by no more than 10% during a 10-day storage period at room temperature. In some embodiments, materials provided herein increase in viscosity by no more than 5% during a 10-day storage period at room temperature.

In some embodiments, materials provided herein exhibit a high compression strength, measured as disclosed in the Examples below. In some embodiments, materials provided herein exhibit a compression strength of greater than 20 MPa. In some embodiments, materials provided herein exhibit a compression strength of greater than 25 MPa. In some embodiments, materials provided herein exhibit a compression strength of greater than 30 MPa. In some embodiments, materials provided herein exhibit a compression strength of greater than 33 MPa. In some embodiments, materials provided herein exhibit a compression strength of greater than 35 MPa.

In some embodiments, materials provided herein exhibit high overlap shear strength, measured as disclosed in the Examples below. In some embodiments, materials provided herein exhibit an overlap shear strength of greater than 8 MPa. In some embodiments, materials provided herein exhibit an overlap shear strength of greater than 9 MPa. In some embodiments, materials provided herein exhibit an overlap shear strength of greater than 10 MPa. In some embodiments, materials provided herein exhibit an overlap shear strength of greater than 10.3 MPa.

In some embodiments, materials provided herein exhibit high tensile strength in potting applications, as measured as disclosed in the Examples below for Tensile Strength Coupon Pull-Out. In some embodiments, materials provided herein exhibit a strength of greater than 100 Kg. In some embodiments, materials provided herein exhibit a strength of greater than 110 Kg. In some embodiments, materials provided herein exhibit a strength of greater than 120 Kg. In some embodiments, materials provided herein exhibit a strength of greater than 130 Kg.

In some embodiments, materials provided herein have a viscosity such that they can be extruded at a sufficiently high extrusion rate in practical applications, as measured as disclosed in the Examples below. In some embodiments, materials provided herein can be extruded at a rate of at least 50 grams/mm, as measured as disclosed in the Examples below. In some embodiments, materials provided herein can be extruded at a rate of at least 75 grams/mm, as measured as disclosed in the Examples below. In some embodiments, materials provided herein can be extruded at a rate of at least 100 grams/mm, as measured as disclosed in the Examples below. In some embodiments, materials provided herein can be extruded at a rate of at least 110 grams/mm, as measured as disclosed in the Examples below. In some embodiments, materials provided herein can be extruded at a rate of at least 120 grams/mm, as measured as disclosed in the Examples below. In some embodiments, materials provided herein can be extruded at a rate of at least 130 grams/mm, as measured as disclosed in the Examples below. In some embodiments, materials provided herein can be extruded at a rate of at least 135 grams/mm, as measured as disclosed in the Examples below.

In some embodiments, materials provided herein exhibit low density after cure, measured as disclosed in the Examples below. In some embodiments, materials provided herein exhibit a density after cure of less than 1.0 gram/cm³. In some embodiments, materials provided herein exhibit a density after cure of less than 0.9 gram/cm³. In some embodiments, materials provided herein exhibit a density after cure of less than 0.8 gram/cm³. In some embodiments, materials provided herein exhibit a density after cure of less than 0.7 gram/cm³. In some embodiments, materials provided herein exhibit a density after cure of less than 0.69 gram/cm³. In some embodiments, materials provided herein exhibit a density after cure of less than 0.68 gram/cm³. In some embodiments, materials provided herein exhibit a density after cure of less than 0.67 gram/cm³. In some embodiments, materials provided herein additionally include low density fillers, which may in some embodiments include microspheres, which may in some embodiments include glass microspheres, polymeric microspheres, or combinations thereof.

In some embodiments, materials provided herein additionally include fire retardant components. In some embodiments, materials provided herein comply with fire retardant regulations of the FAA as of November 1, 2011. In some embodiments, materials provided herein comply with fire retardant regulations of REACH as of November 1, 2011. In some embodiments, materials provided herein pass the fire retardancy test disclosed in the Examples below.

In some embodiments, materials provided herein additionally include pigments or dyes. In some embodiments, materials provided herein additionally include wetting agents or viscosity modifiers.

In some embodiments, materials provided herein are used for potting of hardware in inserts used in panels which may include honeycombs core panels.

Representative embodiments of this disclosure may include, without limitation, the following numbered embodiments.
1. A composition which is an epoxy curative comprising:
   a) a Lewis base,
   b) calcium nitrate, and
   c) a polyamine amide salt.
2. A composition which is a mixture obtained by mixing:
   I) a curable epoxy resin,
   II) an epoxy curative comprising:
      a) a Lewis base,
      b) calcium nitrate, and
      c) a polyamine amide salt.
3. A composition which results from reaction of the epoxy curative of embodiment 1 with an epoxy resin.
4. A composition which results from cure of the mixture according to embodiment 2.
5. A composition according to any of embodiments 3-4 which additionally comprises a fire retardant.
6. A composition according to any of embodiments 3-5 which additionally comprises a low density filler.
7. A composition according to any of embodiments 3-6 having a density of less than 1.0 gram/cm³.
8. A composition according to any of embodiments 3-6 having a density of less than 0.9 gram/cm³.
9. A composition according to any of embodiments 3-6 having a density of less than 0.8 gram/cm³.
10. A composition according to any of embodiments 3-6 having a density of less than 0.7 gram/cm³.
11. A composition according to any of embodiments 3-6 having a density of less than 0.69 gram/cm³.
12. A composition according to any of embodiments 3-6 having a density of less than 0.68 gram/cm³.
13. A composition according to any of embodiments 3-12 having a compression strength of greater than 20 MPa.
14. A composition according to any of embodiments 3-12 having a compression strength of greater than 25 MPa.
15. A composition according to any of embodiments 3-12 having a compression strength of greater than 30 MPa.
16. A composition according to any of embodiments 3-12 having a compression strength of greater than 33 MPa.
17. A composition according to any of embodiments 3-12 having a compression strength of greater than 35 MPa.
18. A composition according to any of embodiments 3-17 having an overlap shear strength of greater than 8 MPa.
19. A composition according to any of embodiments 3-17 having an overlap shear strength of greater than 9 MPa.
20. A composition according to any of embodiments 3-17 having an overlap shear strength of greater than 10 MPa.
21. A composition according to any of embodiments 3-17 having an overlap shear strength of greater than 10.3 MPa.
22. A composition according to any of embodiments 3-21 having a low viscosity suitable for room temperature extrusion.

Objects and advantages of this disclosure are further illustrated by the following examples.

### Examples

Unless otherwise noted, all reagents were obtained or are available from Sigma-Aldrich Company, St. Louis, Missouri, or may be synthesized by known methods. Unless otherwise reported, all ratios are by weight percent.

The following abbreviations are used to describe the examples:

| | |
|---|---|
| °F: | degrees Fahrenheit |
| °C: | degrees Centigrade |
| cm: | centimeters |
| in/min: | inches/minute |
| Kg: | kilograms |
| KPa: | kilopascals |
| Kpsi: | kilo pounds per square inch |
| lbs: | pounds |
| MPa: | megapascals |
| mg: | milligrams |
| mil: | 10-3 inches |
| mls: | milliliters |
| mm: | millimetres |
| mm/min. | millimeteres/minute |
| psi: | pounds per square inch |

### Materials Used.

ANCAMINE K54: Tris-2,4,6-dimethylaminomethyl-phenol, obtained from Air Products and Chemicals, Inc., Allentown, Pennsylvania, USA.
APYRAL SM 200: White aluminium trihydroxide, obtained from Nabaltech AG, Schwandorf, Germany.
BYK-W 966: 52% solids solution of unsaturated polyamine amides and acidic polyesters, obtained from BYK-Chemie GmbH, Wesel, Germany.
BYK-W 9010: 100% solids phosphoric acid ester having an acid value of 129 mg potassium hydroxide/gram, obtained from BYK-Chemie GmbH.
CALCIUM NITRATE TETRAHYDRATE: Obtained from Acros Organics, BVBA, Geel, Belgium.
CRYSTAL VIOLET: Obtained from Sigma-Aldrich, St. Louis, Missouri, USA.
DISPARLON 6500: A polyamid wax, obtained from King Industries, Norwalk, Connecticut, USA.
DUALITE MS 700: Polymeric microspheres, obtained from Lehman & Voss Company, Hamburg, Germany.
EPIKOTE 232: A low-medium viscosity epoxy resin consisting of a blend
of a bisphenol A and a bisphenol F resin, obtained from Momentive Performance Materials Holdings, LLC, Columbus Ohio.
EPODIL 757: 1,4-Cyclohexandimethanoldiglycidylether, obtained from Air Products and Chemicals Inc., Allentown, Pennsylvania, USA.
GLASS BUBBLES D32/4500: Glass bubbles having a density of 0.32 grams/cm³ and an isostatic crush strength of 4,500 pounds/inch2 (31.03 MPa).
TITANIUM DIOXIDE: Obtained under the trade designation "KONOS 1230" from Kronos Worldwide, Inc., Dallas, USA.
TTD: 4,7,10-Trioxa-1,13-tridecane-diamine, obtained from BASF, Ludwigshafen, Germany. Z6040: 3-glycidoxypropyltrimethoxysilane, obtained from Dow Corning GmbH, Wiesbaden, Germany

### Example 1.

### Preparation of Part A:

28.5 grams TTD and 9.5 grams Epikote 232 in a glass reactor and the mixture stirred for 15 minutes at 23°C. The mixture was then heated to 80°C and held, with continuous stirring, for 60 minutes. 2 grams calcium nitrate tetrahydrate and 14 grams of Ancamine K45 were added and stirring continued for another 30 minutes, after which the mixture was allowed to cool back to 23°C. 1 gram BYK W-966 was dispersed until homogeneous using a high speed mixer, model "DAC 150 FVZ", obtained from Hauschild Engineering & Co. KG, Hamm, Germany, for 1 minute at 3,000 rpm. 29.4 grams Apyral SM 200, 0.01 gram Crystal Violet, 14.5 grams D32/4500 glass bubbles and 1 gram Dualite MS700 were added in one minute intervals and dispersed until homogeneous. Part A was subsequently degassed prior to use.

### Preparation of Part B:

1.2 gram Disparlon 6500 was dispersed for 1 minute in 18.8 grams Epikote 232 using the high speed mixer at 3,000 rpm and 23°C. The mixture was then heated to 90°C and held at this temperature for 60 minutes in an oven, after which it was removed and allowed to cool back to 23°C. 1.5 grams BYK W-9010, 18 grams Epodil 757, 3 grams Z6040, 34.5 grams Apryal SM 200, 1 gram titanium dioxide, 21 grams D32/4500 glass bubbles and 1 gram Dualite MS 700, were added in one minute intervals and dispersed until homogeneous using the high speed mixer at 3,000 rpm. Part B was subsequently degassed prior to use.

### Comparative Example 2 and Example 3.

Comparative Examples 2 and Example 3 were prepared per the method generally described in Example 1, according to the compositions listed in Table 1.

**TABLE 1**

| **Part A and Part B Compositions (grams)** | | | |
|---|---|---|---|
| **Part A** | **Example 1** | **Comparative Example 2** | **Example 3** |
| TTD | 28.5 | 28.5 | 28.5 |
| Epikote 232 | 9.5 | 9.5 | 9.5 |
| Calcium Nitrate Tetrahydrate | 2.0 | 2.0 | 2.0 |
| **BYK W-966** | **1.0** | **0** | **1.0** |
| Apryal SM 200 | 29.4 | 29.4 | 29.4 |
| Crystal Violet | 0.01 | 0.01 | 0.01 |
| Ancamine K54 | 14.0 | 14.0 | 14.0 |
| **D32/4500 Glass Bubbles** | **14.5** | **14.5** | **0** |
| **Dualite MS 700** | **1.0** | **1.0** | **0** |

| **Part B** | **Example 1** | **Comparative Example 2** | **Example 3** |
|---|---|---|---|
| Epikote 232 | 18.8 | 18.8 | 18.8 |
| Disparlon 6500 | 1.2 | 1.2 | 1.2 |
| Epodil 757 | 18.0 | 18.0 | 18.0 |
| Epoxy Silane Z6040 | 3.0 | 3.0 | 3.0 |
| BYK W-9010 | 1.5 | 1.5 | 1.5 |
| Apryal SM 200 | 34.5 | 34.5 | 34.5 |
| Titanium Dioxide | 1.0 | 1.0 | 1.0 |
| **D32/4500 Glass Bubbles** | **21.0** | **21.0** | **0** |
| **Dualite MS 700** | **1.0** | **1.0** | **0** |

### Test Methods.

The following tests were performed on the adhesive Examples. Results reported in Table 2 represent an average of three test specimens per adhesive.

### Compression Strength and Compression Modulus.

The compressive strength was measured according to ASTM D695 as follows. A 200 ml, 2:1 dual-chamber cartridge, obtained from Mix Pac Systems, AG, Rotkreuz, Switzerland, was manually filled with Part B and Part A in a 2:1 ratio. A mixing nozzle, type "MC 13-18", was fitted to the cartridge and approximately 50 grams of the mixture extruded, at a pressure of 4 bars (400 kiloPascals) into a TeflonTM-coated mold having the dimensions 12.7 mm (height) x 12.7 mm (width) x 25mm (length). The mixture was then allowed to cure for a minimum of 7 days at 23°C in the mold before removing. The cured test sample was inserted into a tensile compression instrument, model "Z030" obtained from Zwick GmbH & Co, and compressed along its 25 mm axis at a constant crosshead speed of 0.05 inches/minute (1.27 mm/minute). The compressive strength was determined by dividing the ultimate load by the cross sectional area and reported in Kpsi. The compressive modulus was determined by drawing a straight line tangent to the initial linear portion of the load-deflection curve, and then dividing the slope of the straight line by the cross sectional area of the specimen.

### Cohesive Shear Strength.

A 100 x 25 x 1.6 mm strip of aluminium, type "2024 T3 CLAD", obtained from Rocholl GmbH, Aglasterhausen, Germany, was etched for 15 min. at 70°C in a chromic acid-sulfuric acid bath having the following composition:
27.5 weight percent sulphuric acid
7.5 weight percent sodium chromate dehydrate
65.0 weight percent desalinated water
0.5 grams/liter aluminium
1.5 grams/liter copper (II) sulphate pentahydrate

The etched aluminium strip was subsequently rinsed several times in deionized water and wiped dry. Using the MixPac system, approximately 5 grams adhesive was applied on one end of an aluminum strip according to the method used in the Compression Strength Test. A second aluminium strip was then pressed onto the adhesive to form an overlap of 10 mm. and excess adhesive removed using a clean spatula. The overlapped aluminum strips were clamped together at the overlapped section using capacity binder clips, and the clamped assembly then cured at 21°C and ambient humidity for 7 days. The bonded strip was inserted into a tensile strength tester, model "Z050" obtained from Zwick GmbH & Co. KG, Ulm, Germany, and the cohesive shear strength measured according to DIN EN 2243-1 (2005), at a crosshead speed of 10 mm/min. The cohesive strength is reported in kilo pounds per square inch (Kpsi).

### Insert Pull-Out Test

A 0.5 inch (1.27 cm) hole was bored into the center of a 0.5 x 3 x 3-inch (1.27 x 7.62 x 7.62 cm) section of a honeycomb sandwich panel. An insert was placed into the hole, and a sample of adhesive injected into the gap between the fastener and the hole using the MixPac system described above. The adhesive was then cured at approximately 70°F (21.1°C) for 48 hours, followed by 1 hour at 120°F (48.9°C). After cooling to 70°F (21.1°C), a rod was threaded into the machine screw portion of the fastener, which was then attached onto a jaw of the tensile tester. The maximum peak force, reported in lbs., required to dislodge the fastener was then measured at a pull rate of 0.05 inches/minute (1.27 mm/min.).

### Density.

Density of the cured compositions was measured according to ASTM D-1622. Results are reported in grams/cm³.

### Flammability.

Using the MixPac system, a silicone mold measuring 1.27 x 1.27 x 12 cm was filled with Example 1, cured at 70°F (21.1°C) for 48 hours, then subjected to a flammability test according to 14 CFR 25.853(a)(i).

**TABLE 2**

| **Test** | **Example 1** | **Comparative Example 2** | **Example 3** |
|---|---|---|---|
| Cured Density (grams/cm³) | 0.66 | 0.66 | 1.20 |
| Extrusion Rate (grams/mm) | 140 | 20 | 145 |
| Compression Strength (Kpsi/MPa) | 5.3/36.54 | NM | 5.0/34.47 |
| Compression Modulus (Kpsi/MPa) | 250/1,723 | NM | 156/1,076 |
| Overlap Shear Strength (Kpsi/MPa) | 1.5/10.34 | NM | 1.5/10.34 |
| Tensile Strength Coupon Pull-Out (lb/Kg) | 288/130.6 | NM | 270/122.5 |
| Flammability | Passed | NM | Passed |

| | | | |
|---|---|---|---|
| NM = Not Measured | | | |

The material of Example 1 included the polyamine amide salt (BYK-W 966) and the low density fillers (D32/4500 Glass Bubbles and Dualite MS 700). In comparison to the material of Example 3, which included the polyamine amide salt but not the low density fillers, the material of Example 1 exhibits a weight savings (reduction in density) of 45% while retaining similar strength characteristics. The material of Comparative Example 2, which included the low density fillers but not the polyamine amide salt, was highly viscous and therefore not practicable.

## Claims

1. A composition which is an epoxy curative comprising:
a) a Lewis base,
b) calcium nitrate, and
c) a polyamine amide salt.

2. A composition which is a mixture obtained by mixing:
I) a curable epoxy resin,
II) an epoxy curative comprising:
a) a Lewis base,
b) calcium nitrate, and
c) a polyamine amide salt.

3. A composition which results from cure of the mixture according to claim 2.

4. A composition according to claim 3 which additionally comprises a fire retardant.

5. A composition according to claim 3 which additionally comprises a low density filler.

6. A composition according to any of claims 3-5 having a density of less than 1.0 gram/cm³.

7. A composition according to any of claims 3-5 having a density of less than 0.7 gram/cm³.

8. A composition according to any of claims 3-7 having a compression strength of greater than 30 MPa.

9. A composition according to any of claims 3-8 having an overlap shear strength of greater than 8 MPa.

10. A composition according to claim 2 having a low viscosity suitable for room temperature extrusion.

## Patentansprüche

1. Zusammensetzung, die ein Epoxidhärtungsmittel ist, umfassend:
a) eine Lewis-Base,
b) Calciumnitrat, und
c) ein Polyaminamidsalz.

2. Zusammensetzung, die eine Mischung ist, die durch Mischen von Folgendem erhalten wird:
I) einem härtbaren Epoxidharz,
II) einem Epoxidhärtungsmittel, umfassend:
a) eine Lewis-Base,
b) Calciumnitrat, und
c) ein Polyaminamidsalz.

3. Zusammensetzung, die aus der Härtung der Mischung nach Anspruch 2 resultiert.

4. Zusammensetzung nach Anspruch 3, die außerdem ein feuerhemmendes Mittel umfasst.

5. Zusammensetzung nach Anspruch 3, die außerdem einen Füllstoff niedriger Dichte umfasst.

6. Zusammensetzung nach einem der Ansprüche 3 bis 5, die eine Dichte von weniger als 1,0 Gramm/cm³ aufweist.

7. Zusammensetzung nach einem der Ansprüche 3 bis 5, die eine Dichte von weniger als 0,7 Gramm/cm³ aufweist.

8. Zusammensetzung nach einem der Ansprüche 3 bis 7, die eine Druckfestigkeit von weniger als 30 MPa aufweist.

9. Zusammensetzung nach einem der Ansprüche 3 bis 8, die eine Scherfestigkeit bei Überlappung von weniger als 8 MPa aufweist.

10. Zusammensetzung nach Anspruch 2 mit einer niedrigen Viskosität, die für eine Extrusion bei Raumtemperatur geeignet ist.

## Revendications

1. Composition qui est un durcisseur d'époxy comprenant :
a) une base de Lewis,
b) du nitrate de calcium, et
c) un sel amide de polyamine.

2. Composition qui est un mélange obtenu en mélangeant :
I) une résine époxy durcissable,
II) un durcisseur d'époxy comprenant :
a) une base de Lewis,
b) du nitrate de calcium, et
c) un sel amide de polyamine.

3. Composition qui résulte du durcissement du mélange selon la revendication 2.

4. Composition selon la revendication 3, qui comprend en outre un produit ignifuge.

5. Composition selon la revendication 3, qui comprend en outre une charge à faible masse volumique.

6. Composition selon l'une quelconque des revendications 3 à 5, possédant une masse volumique inférieure à 1,0 gramme/cm³.

7. Composition selon l'une quelconque des revendications 3 à 5, possédant une masse volumique inférieure à 0,7 gramme/cm³.

8. Composition selon l'une quelconque des revendications 3 à 7, possédant une résistance à la compression supérieure à 30 MPa.

9. Composition selon l'une quelconque des revendications 3 à 8, possédant une résistance au cisaillement en chevauchement supérieure à 8 MPa.

10. Composition selon la revendication 2, possédant une faible viscosité appropriée pour une extrusion à température ambiante.
